# DEMANDE DE BREVET EUROPEEN

(11) **EP 2 725 487 A1**
(43) Date de publication de la demande: **30.04.2014**
(21) Numéro de dépôt: 13189548.4
(22) Date de dépôt: 21.10.2013
(51) Int. Cl.: G06F 9/44, H04L 12/28

(54) **Noeud d'un bus de service**

(30) Priorité: 24.10.2012 FR 1260133
(71) Demandeur: Schneider Electric Industries SAS, 92500 Rueil-Malmaison (FR)
(72) Inventeur: Nappey, Philippe, 38050 Grenoble Cedex 9 (FR)
(74) Mandataire: Ilgart, Jean-Christophe

(57) **Abrégé**

L'invention concerne un noeud (N1, N2) d'un bus de services reliant une pluralité d'entités (101, 103A, 201, 203A, 205A) via une pluralité de noeuds, le noeud comportant des adaptateurs (100, 102, 200, 202, 204) aptes à être interfacés avec un sous-ensemble donné de la pluralité d'entités et un module de format de données pivot (104, 206) apte à faire communiquer les entités du sous-ensemble donné,
caractérisé en ce qu'il est mis en oeuvre dans un dispositif relié à un réseau de communication, en ce qu'il est adapté à rechercher les entités du sous-ensemble donné et en ce qu'il comporte un registre (105, 207) adapté à mémoriser les caractéristiques respectives des entités du sous-ensemble donné, de manière à gérer les entités du sous-ensemble de manière distribuée.

## Description

### DOMAINE TECHNIQUE

La présente invention concerne le domaine des bus de services.

Dans l'environnement industriel actuel, des dispositifs tels que des capteurs et des actionneurs communiquent de plus en plus. Un bus de services est une solution pour faciliter ces communications. Le bus de services est essentiellement un composant logiciel qui représente les dispositifs existants sous forme de service web. Ces services web partagent une interface de communication standard et un modèle de données commun pour permettre une meilleure interopérabilité entre dispositifs et faciliter ainsi l'intégration de ces dispositifs dans les architectures industrielles. Le bus de services doit cependant surmonter deux contraintes : les dispositifs existants forment un ensemble très hétérogène (différents protocoles de communication, différents modèles de données...) et le nombre des dispositifs communiquant ne cesse de croitre.

### ÉTAT DE LA TECHNIQUE ANTÉRIEURE

Le document WO 0246916 décrit une couche d'abstraction destinée à découpler des sources de données et des consommateurs de ces données.

Le document US 7617500 décrit une architecture générique pour intégrer des composants présentant des interfaces différentes les unes des autres dans un environnement d'application d'entreprise.

Le document US 11966736 une architecture de bus de services classique qui permet un découplage entre les fournisseurs de données et les consommateurs de données au moyen d'un format de données pivot commun.

Ces documents n'abordent pas la question de la distribution dans le bus de services.

### EXPOSÉ DE L'INVENTION

L'invention vise à résoudre les problèmes de la technique antérieure en fournissant un noeud d'un bus de services reliant une pluralité d'entités via une pluralité de noeuds, le noeud comportant des adaptateurs aptes à être interfacés avec un sous-ensemble donné de la pluralité d'entités et un module de format de données pivot apte à faire communiquer les entités du sous-ensemble donné,
**caractérisé en ce qu'il** est mis en oeuvre dans un dispositif relié à un réseau de communication, en ce qu'il est adapté à rechercher les entités du sous-ensemble donné et en ce qu'il comporte un registre adapté à mémoriser les caractéristiques respectives des entités du sous-ensemble donné, de manière à gérer les entités du sous-ensemble de manière distribuée.

Les entités gérées de manière distribuée par le noeud de bus de services selon l'invention sont des dispositifs ou des services. Le bus de services selon l'invention ne repose pas sur une gestion centralisée des entités qui serait effectuée dans un serveur central.

Chaque noeud du bus de services a une gestion et une connaissance parcellaires du bus de services, puisqu'il gère un sous-ensemble des entités et il mémorise les informations relatives à ce sous-ensemble dans son registre.

Ainsi, le bus de services selon l'invention peut augmenter en taille par l'intégration de nouveau noeuds et/ou nouvelles entités, sans risque de saturation d'un serveur central. Le bus de services selon l'invention comporte au minimum un noeud tel que précédemment présenté.

Le bus de services selon l'invention supporte aussi l'évolution dans le temps des techniques mises en oeuvre dans les différents dispositifs ou services. De nouveaux composants ainsi que de nouvelles fonctionnalités peuvent être pris en compte, et d'autres plus anciens peuvent être supprimés.

Le bus de services selon l'invention permet l'interopérabilité de différents dispositifs ou services, notamment grâce à l'utilisation de format de données pivot.

Selon une caractéristique préférée, le noeud de bus de services comporte un serveur web et des pages web pour la configuration du bus de services.

Ainsi un utilisateur peut accéder au bus de services par l'un quelconque des noeuds du bus de services.

Selon une caractéristique préférée, le noeud de bus de services comporte un module de découverte des noeuds voisins. Un noeud du bus de services découvre ainsi d'autres noeuds du bus de services.

Selon une caractéristique préférée, le noeud de bus de services il est apte à être interfacés avec des entités qui sont des dispositifs ou des services.

Le noeud de bus de service est ainsi utilisable avec n'importe quel équipement ou n'importe quel service.

L'invention concerne aussi un bus de services **caractérisé en ce qu'il** comporte au moins un noeud tel que précédemment présenté.

Le bus de service présente des avantages analogues à ceux présentés ci-dessus.

L'invention concerne aussi un procédé de gestion d'un noeud d'un bus de services reliant une pluralité d'entités via une pluralité de noeuds, le noeud comportant des adaptateurs aptes à être interfacés avec un sous-ensemble donné de la pluralité d'entités et un module de format de données pivot apte à faire communiquer les entités du sous-ensemble donné,
**caractérisé en ce qu'il** comporte les étapes de :
- recherche des entités du sous-ensemble donné, et
- mémorisation des caractéristiques respectives des entités du sous-ensemble donné dans un registre, de manière à gérer les entités du sous-ensemble de manière distribuée,
le noeud de bus de services étant mis en oeuvre dans un dispositif relié à un réseau de communication.

Selon une caractéristique préférée, le procédé de gestion d'un noeud d'un bus de services comporte une étape de découverte des noeuds voisins.

Le procédé de gestion présente des avantages analogues à ceux précédemment présentés.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en oeuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :
- La figure 1 représente un bus de services selon l'invention,
- La figure 2 représente des noeuds d'un bus de services selon l'invention, et
- La figure 3 représente des étapes d'un procédé de gestion d'un noeud d'un bus de services selon l'invention.

### EXPOSÉ DÉTAILLÉ DE MODES DE RÉALISATION PARTICULIERS

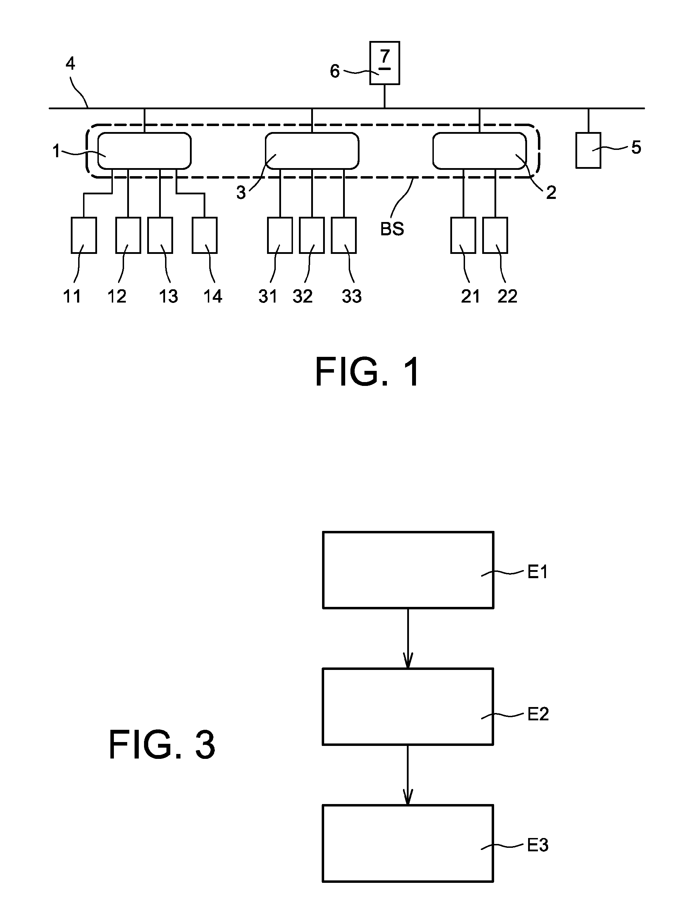

Selon un mode de réalisation représenté à la **figure 1****,** l'invention est mise en oeuvre dans un réseau local domotique.

Le réseau comporte des contrôleurs dont deux référencés 1 et 2 ont été représentés à titre d'exemple. Il comporte également une passerelle 3. Ces trois éléments intègrent les noeuds d'un bus de services BS selon l'invention. Les noeuds du bus de services selon l'invention sont ainsi intégrés dans des matériels préexistants. Chaque noeud gère un ensemble d'entités qui sont des dispositifs ou des services. Un noeud joue ainsi le rôle de mandataire informatique (en Anglais : proxy) pour les entités qu'il gère.

Bien entendu, le nombre de noeuds peut être différent. Un noeud peut être ajouté au bus de services ou au contraire supprimé.

Dans le réseau local domotique donné à titre d'exemple, le contrôleur 1 est relié à un dispositif de chauffage, ventilation et climatisation 11. Il est également relié à un dispositif 12 de gestion des volets, à des capteurs 13 et à des lampes d'éclairage 14.

Le contrôleur 2 est relié à un wattmètre 21 et un disjoncteur 22. Ces dispositifs sont typiquement des automates, ils ont une fonction passerelle protocolaire et implémentent également un certain nombre de fonctions métier liées au domaine.

La passerelle 3 est reliée à un service météo 31 fourni via le réseau Internet, un ensemble de services 32 découverts par la passerelle, par exemple suivant le protocole UPnP (Universal Plug and Play) et un service de réseau social 33.

L'ensemble des dispositifs ou services 11, 12, 13, 14, 21, 22, 31, 32 et 33 constituent des entités au sens de l'invention.

Les contrôleurs 1, 2 et la passerelle 3 sont reliés à un bus 4 du réseau local auquel est également un configurateur client Web 5 et un ordinateur 6 sur lequel une application 7 est mise en oeuvre. Le configurateur client comporte des pages web qui servent à la gestion du bus de services, notamment à son parcours et à sa configuration. L'application 7 est une application « métier », par exemple pour superviser ou contrôler un ou des équipements.

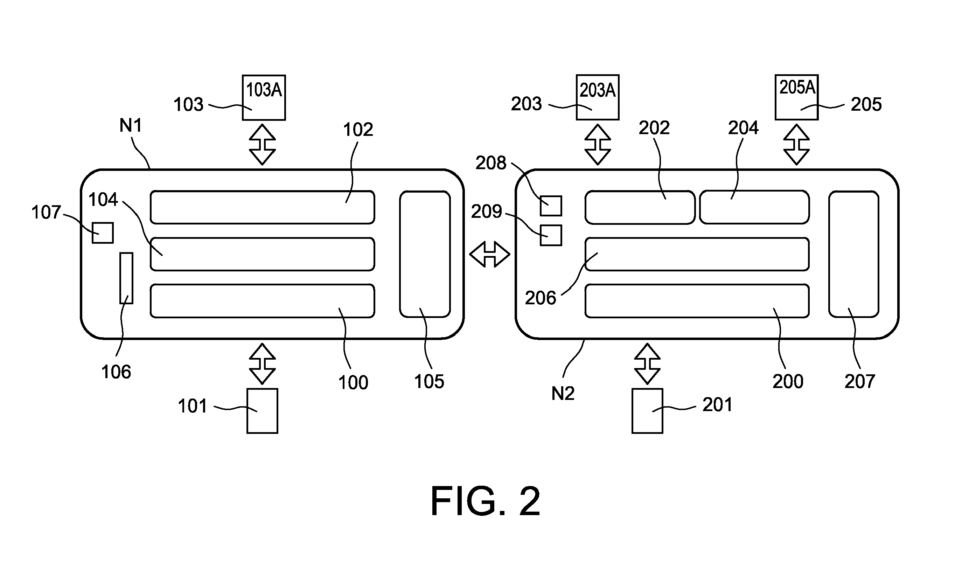

En référence à la **figure 2****,** deux noeuds N1 et N2 du bus de services selon l'invention sont décrits.

Le noeud N1 comporte un adaptateur OPC (marque déposée) 100. L'adaptateur 100 est destiné à être connecté à un dispositif 101 présentant une interface fonctionnant selon le protocole OPC.

Bien entendu, les protocoles qui peuvent être mis en oeuvre au niveau des fournisseurs de données sont donnés à titre d'exemples non limitatifs. On peut citer également LON, SNMP...

Le noeud N1 comporte un adaptateur WS (Web Service) 102. L'adaptateur 102 est destiné à être connecté à un ordinateur 103 dans lequel une application 103A est mise en oeuvre.

Le noeud N1 comporte un module de format de données pivot 104 pour transposer les données collectées suivant les protocoles et formats respectifs du dispositif 101 et de l'application de l'ordinateur 103 en un modèle de données commun.

Le noeud N1 comporte un registre 105 pour mémoriser le nom et une description de chaque dispositif et service qu'il gère. Un noeud gère les dispositifs et services qui lui sont connectés, soit physiquement, soit logiquement.

Le noeud N1 intègre également un serveur Web 106 et des pages Web pour permettre de parcourir le bus de services et de le configurer, notamment en ce qui concerne les droits d'accès, les informations des dispositifs et services.

Le noeud N1 intègre un module de découverte 107 des noeuds voisins.

Le noeud N2 comporte un adaptateur Modbus 200. L'adaptateur 200 est destiné à être connecté à un dispositif 201 qui communique selon le protocole Modbus.

Le noeud N2 comporte un adaptateur WS (Web Service) 202. L'adaptateur 202 est destiné à être connecté à un ordinateur 203 dans lequel une application 203A est mise en oeuvre.

Le noeud N2 comporte un adaptateur OPC UA (Unified Architecture) 204. L'adaptateur 204 est destiné à être connecté à un ordinateur 205 dans lequel une application 205A est mise en oeuvre.

Le noeud N2 comporte un module de format de données pivot 206 pour transposer les données collectées suivant les protocoles et formats respectifs du dispositif 201 et des applications mises en oeuvre par les ordinateurs 203 et 205 en un modèle de données commun.

Le noeud N2 comporte un registre 207 pour mémoriser le nom et une description de chaque dispositif et service qu'il gère, c'est-à-dire les dispositifs et services qui lui sont connectés, soit physiquement, soit logiquement.

Le noeud N2 intègre également un serveur Web 208 et des pages Web pour permettre de parcourir le bus de services et de le configurer, notamment en ce qui concerne les droits d'accès, les informations des dispositifs et services.

Le noeud N2 intègre un module de découverte 209 des noeuds voisins.

La configuration des noeuds et du bus de services selon l'invention est maintenant décrite en référence à la **figure 3**, sous la forme d'un procédé comportant des étapes E1 à E3.

L'étape E1 est mise en oeuvre par chaque noeud du réseau. On considère un noeud en particulier. L'étape E1 comporte la recherche, par chacun des adaptateurs du noeud considéré, des dispositifs et/ou services qui lui sont reliés. Lorsqu'un dispositif ou un service est découvert par un adaptateur, ses caractéristiques (nom, type, description...) sont enregistrées dans le registre du noeud considéré.

Cette étape est effectuée automatiquement au démarrage du noeud. Elle peut être effectuée de nouveau par la suite sur demande de l'utilisateur (lors de la connexion d'un nouveau dispositif par exemple).

L'étape E2 est mise en oeuvre par chaque noeud du réseau. On considère un noeud en particulier. L'étape E2 est la découverte de ses voisins par le noeud considéré. Cette étape met en oeuvre une procédure de découverte Web Service (connue sous le nom de WS discovery). Lorsque le noeud considéré découvre un noeud voisin, il enregistre les informations concernant ce noeud voisin dans son registre.

Comme précédemment, cette étape est effectuée au démarrage du noeud et éventuellement suite à une demande de l'utilisateur.

Il est à noter que des noeuds distants, connectés derrière un routeur, ou en d'autres termes n'appartenant pas au réseau local, ne sont pas découverts par l'étape E2. En effet cette procédure est limitée au réseau local, c'est-à-dire aux noeuds physiquement connectés au réseau local. Lorsqu'un noeud distant est à enregistrer dans le bus de services, l'étape E3 est alors mise en oeuvre par un opérateur qui configure le lien correspondant à l'aide des pages de configuration client Web.

Lorsque le bus de services selon l'invention est configuré, un utilisateur peut avoir accès à tous les services présents sur le bus, c'est-à-dire tous les services enregistrés dans les noeuds du bus de services. En outre, il accède aux services par l'intermédiaire d'une seule interface. L'utilisateur se connecte à l'un des noeuds et voit l'ensemble du bus de services. Par exemple, si l'utilisateur se connecte au noeud N2 (figure 2) en utilisant le protocole OPC UA, il peut parcourir tout l'espace du bus de services, incluant les autres noeuds, par exemple le noeud N1, même si ces noeuds ne supportent pas ce protocole.

En pratique, un utilisateur connecte un ordinateur au réseau, puis ouvre un navigateur Web pour s'adresser à un noeud du bus de services. On rappelle que chaque noeud du bus de services intègre un serveur Web.

L'utilisateur peut alors naviguer parmi les services proposés par tous les noeuds du bus de services, obtenir leurs caractéristiques et utiliser ces services.

L'utilisateur peut intégrer les services fournis par le bus de services dans une application en implémentant l'une des interfaces fournies par le bus de services.

## Revendications

1. Noeud (N1, N2) d'un bus de services reliant une pluralité d'entités (101, 103A, 201, 203A, 205A) via une pluralité de noeuds, le noeud comportant des adaptateurs (100, 102, 200, 202, 204) aptes à être interfacés avec un sous-ensemble donné de la pluralité d'entités et un module de format de données pivot (104, 206) apte à faire communiquer les entités du sous-ensemble donné,
**caractérisé en ce qu'il** est mis en oeuvre dans un dispositif relié à un réseau de communication, **en ce qu'**il est adapté à rechercher les entités du sous-ensemble donné et **en ce qu'**il comporte un registre (105, 207) adapté à mémoriser les caractéristiques respectives des entités du sous-ensemble donné, de manière à gérer les entités du sous-ensemble de manière distribuée.

2. Noeud d'un bus de services selon la revendication 1, **caractérisé en ce qu'il** comporte un serveur web et des pages web (106, 208) pour la configuration du bus de services.

3. Noeud d'un bus de services selon la revendication 1 ou 2, **caractérisé en ce qu'il** comporte un module de découverte des noeuds voisins.

4. Noeud d'un bus de services selon l'une quelconque des revendications 1 à 3, **caractérisé en ce qu'il** est apte à être interfacés avec des entités qui sont des dispositifs ou des services.

5. bus de services **caractérisé en ce qu'il** comporte au moins un noeud selon l'une quelconque des revendications 1 à 4.

6. Procédé de gestion d'un noeud d'un bus de services reliant une pluralité d'entités via une pluralité de noeuds, le noeud comportant des adaptateurs aptes à être interfacés avec un sous-ensemble donné de la pluralité d'entités et un module de format de données pivot apte à faire communiquer les entités du sous-ensemble donné,
**caractérisé en ce qu'il** comporte les étapes de :
- recherche (E1) des entités du sous-ensemble donné, et
- mémorisation (E1) des caractéristiques respectives des entités du sous-ensemble donné dans un registre, de manière à gérer les entités du sous-ensemble de manière distribuée,
le noeud de bus de services étant mis en oeuvre dans un dispositif relié à un réseau de communication.

7. Procédé de gestion d'un noeud d'un bus de services selon la revendication 6, **caractérisé en ce qu'il** comporte une étape (E2) de découverte des noeuds voisins.

8. Produit programme d'ordinateur comportant des instructions pour la mise en oeuvre du procédé de gestion d'un noeud d'un bus de services selon l'une quelconque des revendications 6 à 7 lorsque ledit programme est exécuté par un ordinateur.

9. Support d'enregistrement lisible par un ordinateur sur lequel est enregistré un programme d'ordinateur comprenant des instructions pour la mise en oeuvre du procédé de gestion d'un noeud d'un bus de services selon l'une quelconque des revendications 6 à 7.
